# EUROPÄISCHE PATENTSCHRIFT

(11) **EP 1 544 585 B1**
(45) Veröffentlichungstag und Bekanntmachung des Hinweises auf die Patenterteilung: **20.05.2015**
(21) Anmeldenummer: 04026461.6
(22) Anmeldetag: 08.11.2004
(51) Int. Cl.: G01F 23/00, H01R 13/52

(54) **Koaxiale spaltfreie Durchführung für einen Füllstandsensor**
Coaxial gapless feed-through for a level sensor
Traversée coaxiale sans interstice pour un capteur de niveau

(30) Priorität: 12.12.2003 US 529313 P
(43) Veröffentlichungstag der Anmeldung: 22.06.2005
(73) Patentinhaber: VEGA Grieshaber KG, 77709 Wolfach (DE)
(72) Erfinder: Dietmeier, Jürgen, 77756 Hausach (DE)
(74) Vertreter: Maiwald Patentanwalts GmbH

(56) Entgegenhaltungen:
- DE-A1- 10 117 976
- DE-C1- 19 515 897
- US-A- 5 667 008

## Beschreibung

### TECHNISCHES GEBIET

Die vorliegende Erfindung betrifft allgemein eine Durchführungsbaugruppe für einen in oder an einem Behälter anbringbaren Füllstandsensor der nachfolgend genauer spezifizierten Gattung. Insbesondere betrifft die Erfindung eine Durchführungsbaugruppe für einen nach dem Prinzip der Laufzeitmessung geführter elektromagnetischer Wellen arbeitenden Füllstandsensor (TDR-Füllstandsensor) oder für einen kapazitiven Füllstandsensor, die zur Abdichtung des Behälterinnenraums gegenüber dem Innenraum des Sensors keine elastomeren Dichtungsmaterialien und insbesondere keine elastomeren O-Ringdichtungen aufweist.

### HINTERGRUND DER ERFINDUNG

Zur Füllstandmessung werden oft Messsysteme eingesetzt, die unter Verwendung der gemessenen Laufzeit, die eine von einem in der Behälterdecke befestigten Füllstandsensor ausgesandte elektromagnetische Welle zur Füllgutoberfläche und zurück benötigt. Unter Kenntnis der Behälterhöhe kann dann die gesuchte Füllstandshöhe berechnet werden. Solche unter der Fachbezeichnung Füllstandradar bekannten Sensoren beruhen im allgemeinen auf der Eigenschaft elektromagnetischer Wellen, sich innerhalb eines homogenen nichtleitenden Mediums mit konstanter Geschwindigkeit auszubreiten und an der Grenzfläche unterschiedlicher Medien zumindest teilweise reflektiert zu werden. Jede Grenzschicht zweier Medien mit unterschiedlichen Dielektrizitätskonstanten erzeugt bei Auftreffen der Welle ein Radarecho. Je größer der Unterschied der beiden Dielektrizitätskonstanten ist, desto stärker ändert sich der Wellenwiderstand der Wellenausbreitung und desto größer ist das zu beobachtende Echo.

Zur Bestimmung der gesuchten Wellenlaufzeit sind unterschiedliche Radarprinzipien bekannt. Zwei häufig angewandte Verfahren sind zum einen das Impulslaufzeitverfahren (Pulsradar) und zum anderen das frequenzmodulierte Dauerstrichverfahren (FMCW-Radar). Das Pulsradar bedient sich der pulsförmigen Amplitudenmodulation der abzustrahlenden Welle und ermittelt die direkte Zeitdauer zwischen der Aussendung und dem Empfang der Pulse. Das FMCW-Radar hingegen bestimmt die Laufzeit auf indirektem Weg über die Aussendung eines frequenzmodulierten Signals und Differenzbildung zwischen gesendeter und empfangener Momentanfrequenz.

Neben den unterschiedlichen Radarprinzipien werden auch je nach Anwendung verschiedene Frequenzbereiche der elektromagnetischen Wellen benutzt. So existieren beispielsweise Pulsradargeräte mit Trägerfrequenzen im Bereich zwischen 5 und 30 GHz und daneben ebenso solche, die im Basisband als sogenannte Monopulsradars ohne Trägerfrequenz arbeiten.

Außerdem ist eine Reihe von Verfahren und Vorrichtungen bekannt, die elektromagnetische Wellen zu der Füllgutoberfläche und zurück zu leiten. Dabei unterscheidet man grundsätzlich zwischen in den Raum abgestrahlte Wellen und durch eine Leitung geführter Wellen. Ein Füllstandmessgerät, bei dem Mikrowellen über eine Koaxialleitung in eine zur Abstrahlung einer elektromagnetischen Welle dienenden Antenne eingeleitet werden, ist beispielweise aus der EP 0 834 722 A2 bekannt. Hier ist die Antenne zweiteilig ausgebildet und besteht aus einem ersten Antennenteil in Form eines Vollzylinders aus einem Dielektrikum, der von einer metallenen Hülse umgeben ist. An diesem ersten Antennenteil schließt sich ein zweites Antennenteil an, das das Wellensignal in Richtung des Füllguts abstrahlt. Das Füllstandmessgerät selbst ist mittels einer Flanschbefestigung in einem Behälterstutzen befestigt, wobei zur Abdichtung zwischen dem Behälterflansch und dem Gehäuseflansch ein gesondertes Dichtungselement eingefügt ist.

Einen bezüglich der Durchführung und der Signalführung anderen Aufbau besitzen die nach dem Prinzip der Laufzeitmessung geführter elektromagnetischer Wellen arbeitenden Füllstandsensoren, die auch als TDR-Füllstandsensor (time domain reflectometry) bezeichnet werden. Bei diesen Füllstandsensoren, wird eine elektromagnetische Welle über eine Leitung, wie beispielweise eine Sonde in Form eines metallischen Seiles oder Stabes zum Reflexionsort und von dort zum Sensor zurückgeführt. Diese Sensoren besitzen gegenüber solchen, die hochfrequente Wellen frei abstrahlen, eine wesentlich geringere Dämpfung des reflektierten Echosignals, weil der Leistungsfluss nur in dem eng begrenzten Bereich in der Umgebung entlang des leitfähigen Wellenleiters erfolgt. Außerdem werden Störechos aus dem Behälterinneren, die z. B. von Reflexionen der Welle an Behältereinbauten (Rührwerke, Rohre) stammen und bei freistrahlenden Sensoren die Identifikation des einen Echos von der Füllgutoberfläche erschweren, bei den Sensoren mit geführten Wellen weitgehend vermieden. Dies führt dazu, dass die Füllstandmessung mit geführten elektromagnetischen Wellen weitgehend unabhängig von der Behälterkonstruktion und außerdem von den Produkteigenschaften des Füllguts oder sonstiger Betriebsbedingungen (z.B. Staub, Schüttgutwinkel) ist und deshalb zu zuverlässigen Messergebnissen führt.

Als Wellenleiter zur Führung der Welle können alle hochfrequenzüblichen, bekannten Leitungen benutzt werden, bei denen die Welle zumindest teilweise das Medium durchdringt, das den metallischen Leiter umgibt oder von diesen umschlossen wird. Durch ihren einfachen mechanischen Aufbau und ihre Eignung für jegliche Füllgüter, d.h. Schüttgüter und Flüssigkeiten, wird besonders die Eindrahtleitung oder Einzelleitersonde in der Füllstandmesstechnik oft eingesetzt. In ihrer Ausgestaltung als Stab- oder Seilsonde ist sie vor allem gegen Ablagerungen und Anhaftungen von Füllgütern unempfindlich. In der DE 44 04 745 C2 ist ein Füllstandsensor mit einer solchen Sonde beispielhaft beschrieben.

Der Leitungsweg zwischen Elektronik und Sonde besteht bei Füllstandsensoren fast immer aus einer bereits erwähnten Durchführung und zusätzlich meist aus einem Koaxialkabel, welches die Verbindung zur Sensorelektronik herstellt, auf der die elektronische Schaltung zur Erzeugung des Sendesignals und Auswertung des Reflexionssignals aufgebaut ist. Das Koaxialkabel kann in besonderen Fällen eingespart werden, wenn die Platine eine direkte elektrische und mechanische Verbindung zur Durchführung aufweist.

Die Durchführungsbaugruppe dient dazu, das Messsignal von dem außerhalb des Füllgutbehälters befestigten Sensor zu der sich innerhalb des Behälters erstreckenden Sonde zu leiten. Außerdem muss sie einen mechanischen Halt für die Sonde bieten. Zu diesem Zweck besitzt sie üblicherweise einen metallischen Prozessanschluss, der fest in den Behälter, z.B. in einer Deckelöffnung desselben, eingebaut werden kann und einen die Welle leitenden Innenleiter aufnimmt. Zur Vermeidung möglicher Kurzschlüsse befindet sich zwischen Trägerelement und Leitelement ein Isolierelement. Der Innenleiter verbindet einerseits das üblicherweise zur Elektronik führende Koaxialkabel und andererseits die in den Behälter ragende Sonde.

Gewöhnliche Durchführungsbaugruppen für Einzelleitersonden sind üblicherweise koaxial aufgebaut, d.h. der Innenleiter ist koaxial von dem Isolierelement und dem Prozessanschluss umgeben. Dieser grundsätzliche Aufbau kann zwar auf verschiedenartige Weise technisch realisiert werden, jedoch gilt es in der Regel bestimmte Anforderungen wie z.B. Abdichtung der Behälteratmosphäre, Druckfestigkeit, Aufnahme hoher Zugkräfte an der Sonde, hohe Temperatur und Beständigkeit gegen aggressive Behälteratmosphäre zu genügen. Insbesondere um den Abdichtungsanforderungen gerecht werden zu können, müssen in aller Regel in der Durchführungsbaugruppe elastomere Dichtelemente vorgesehen werden, um den Behälterinnenraum gegenüber dem Innenraum des Sensorgehäuses abzudichten.

Dem zuvor beschriebenen Aufbau eines TDR-Füllstandsensors sehr ähnlich ist der Aufbau von kapazitiven Füllstandsensoren. Das Messprinzip derartiger kapazitiver Füllstandssensoren basiert auf der Tatsache, dass das Füllgut und der Behälter zusammen mit einer Messsonde des kapazitiven Füllstandssensors einen elektrischen Kondensator bilden. Der Füllstand wird bei diesem Messverfahren durch Messung der Kondensatorkapazität erfasst, die sich mit veränderndem Füllstand verändert, woraus wiederum auf die Füllhöhe geschlossen werden kann.

Derartige kapazitive Füllstandssensoren sind beispielsweise aus der DE 027 44 864 A1 oder DE 030 50 189 A1 bekannt, aus denen der den TDR-Füllstandsensoren ähnliche Aufbau kapazitiver Füllstandssensoren entnommen werden kann. Auch diese Sensoren weisen einen Innenleiter auf, der gegenüber einem Prozessanschluss isoliert ist. Um auch bei diesen kapazitiven Füllstandssensoren den Dichtungsanforderungen gerecht werden zu können, müssen in der Durchführungsbaugruppe Dichtelemente vorgesehen werden, um den Behälterinnenraum gegenüber dem Sensorinnenraum abzudichten. Derartige Dichtelemente bestehen in aller Regel aus elastischen, teilkristallinen oder thermoplastischen Werkstoffen, wie beispielsweise Polytetrafluorethylene (PTFE). Derartige Werkstoffe sind jedoch normalerweise mit dem Nachteil behaftet, unter Druck- und/oder Temperatureinwirkung zu verspröden oder zu fließen zu beginnen, weshalb derartige Dichtelemente für Füllstandsensoren, die hohen Drücken und/oder Temperaturen ausgesetzt sind, nicht geeignet sind.

DE10117976 beschreibt eine Einrichtung zur Durchführung von elektrischen Leitungen durch die Wandung eines Kraftstoffbehälters bei der ein aus Stahl gefertigter Träger stoffschlüssig mit der Wandung des Kraftstoffbehälters verbunden ist.

DE19515897 beschreibt eine Anordnung eines Sensorelements eines elektrochemischen Messfühlers in einem metallischen Gehäuse, bei dem das Sensorelement in Form eines einseitig geschlossenen Rohres mit einem metallischen Dichtring auf einem am Gehäuse ausgebildeten Dichtsitz aufliegt.

US5667008 beschreibt einen elektrischen Leiter zur Verwendung mit einem Bohrloch.

### DARSTELLUNG DER ERFINDUNG

Ausgehend von der zuvor beschriebenen Abdichtungsproblematik, liegt der Erfindung die Aufgabe zugrunde, eine Durchführung für einen Füllstandsensor bereitzustellen, die zwar einerseits eine dichte Abdichtung zwischen Behälterinnenraum und dem Innenraum des Sensors gewährleistet, die jedoch nicht mit dem Problem üblicher Abdichtungselemente behaftet ist, die unter Druck- und/oder Temperatureinwirkung zu fließen beginnen und somit den Dichtungsanforderungen auf Dauer nicht gerecht werden. Sofern im Folgenden von einem Füllstandsensor die Rede ist, so sind darunter die zuvor beschriebenen TDR-Füllstandsensoren sowie auch kapazitive Füllstandsensoren zu subsumieren.

Eine Lösung wird gemäß dem Gegenstand der unabhängigen Ansprüche bereitgestellt. Bevorzugte Ausgestaltungen ergeben sich aus den abhängigen Ansprüchen.

Zur Lösung des zuvor beschriebenen Problems wird gemäß einem ersten Aspekt der vorliegenden Erfindung eine Durchführungsbaugruppe für einen in oder an einem Behälter anbringbaren Füllstandsensor bereitgestellt, bei der zur Abdichtung des Behälterinnenraums gegenüber dem Sensorinnenraum keine gesonderten Dichtungselemente vorgesehen werden müssen, sondern bei der die Abdichtfunktion einzig und allein auf der Tatsache beruht, dass die in der Durchführungsbaugruppe wesentlichen konzentrisch zueinander angeordneten Bauteile an ihren Umfangsflächen präzise, beispielsweise mit CNC-Werkzeugmaschinen bearbeitet sind, so dass im eingebauten Zustand die in der Durchführungsbaugruppe angeordneten Bauteile an ihren gegenseitigen Umfangsflächen derart dicht und formschlüssig aneinander anliegen, dass zusätzliche Dichtelemente zur Abdichtung entfallen können.

Ein mit der vorliegenden Erfindung erreichbarer Vorteil besteht somit darin, dass aufgrund der passgenauen Bearbeitung der Umfangsflächen der in der Durchführungsbaugruppe im Wesentlichen konzentrisch zueinander angeordneten Bauteile keine zusätzlichen Dichtelemente angeordnet werden müssen, so dass trotz möglicherweise auftretender Druck- und/oder Temperatureinflüsse die Dichtung zwischen dem Behälterinnenraum und dem Sensorinnenraum auf Dauer gewährleistet werden kann. Ein weiterer durch die vorliegende Erfindung erreichbarer Vorteil besteht darin, dass infolge der Einsparung zusätzlicher Dichtungselemente die gesamte Durchführungsbaugruppe einen einfacheren und kostengünstigeren Aufbau erhält. Ein möglicher weiterer, mit der vorliegenden Erfindung erreichbarer Vorteil besteht ferner darin, dass trotz möglicherweise auftretender Temperatur- und/oder Druckeinwirkungen die Abdichtung zwischen Behälterinnenraum und Sensorinnenraum auf Dauer sichergestellt ist, wodurch die Funktionssicherheit des gesamten Füllstandsensors auf Dauer gewährleistet werden kann.

Gemäß einem weiteren Aspekt der vorliegenden Erfindung weist die Durchführungsbaugruppe einen Prozessanschluss auf, in dem ein Innenleiter angeordnet ist, der sich seinerseits durch einen in eine feste Form aufweisenden Isolierdichtkörper hindurcherstreckt, der sowohl den Innenleiter formschlüssig dichtend umfangsseitig umgibt als auch formschlüssig dichtend in den Prozessanschluss eingepasst ist. Wie daraus entnommen werden kann, schließt sich an die außenumfangsseitige Mantelfläche des Innenleiters der Isolierdichtkörper dicht anliegend an, der seinerseits wiederum mit seiner außenumfangsseitigen Mantelfläche vollständig dicht in den Prozessanschluss eingepasst ist. Indem der Isolierdichtkörper als massiver Körper vorgefertigt wird, dessen Mantelflächen so präzise vorgefertigt sind, um dichtend an den entsprechenden Mantelflächen des Innenleiters bzw. des Prozessanschlusses anzuliegen, werden zusätzliche, beispielsweise elastomere Dichtungselemente nicht benötigt, die üblicherweise mit den zuvor beschriebenen Dichtungsproblemen infolge Druck- und /oder Temperatureinwirkung behaftet sind.

Zwar können die aneinanderliegenden Mantelflächen des Prozessanschlusses, des Innenleiters sowie des Isolierdichtkörpers prinzipiell so exakt gearbeitet werden, um so dicht aneinander anzuliegen, dass im Optimalfalle durch die jeweils aneinandergrenzenden Mantelflächen der drei Bauteile kein Gasaustausch möglich ist. Um jedoch möglicherweise fehlerbedingte Oberflächenunebenheiten der Mantelflächen ausgleichen zu können, ist der Isolierdichtkörper aus einem Kunststoffmaterial gefertigt, das derartige Unregelmäßigkeiten durch eine gewisse Elastizität ausgleichen kann. Vorzugsweise besteht der Isolierdichtkörper aus einem temperaturunempfindlichen, elastischen, druckfesten, kriech- und/oder fließarmen Kunststoffmaterial, mit dielektrischen Eigenschaften, wie beispielweise Polyimid, wodurch gewährleistet werden kann, dass die Durchführungsbaugruppe, die sich zwischen Behälterinnenraum und Sensorinnenraum befindet, auf Dauer auch unter widrigen Prozessbedingungen, wie beispielsweise chemischen Einflüssen, atmosphärischen Prozessdrücken oder hohen Temperaturen auf Dauer dicht ist. Bei Versuchen hat sich insbesondere der Werkstoff VESPEL^{®} und hierbei vor allem der Typ SP1 als geeignet erwiesen, wobei selbstverständlich auch andere VESPEL^{®}-Typen oder gattungsähnliche Werkstoffe unter entsprechenden Einsatzbedingungen zum Einsatz kommen können.

Die Werkstoffe, die sich für den Isolierdichtkörper als besonders geeignet erweisen, zeichnen sich durch eine gute Form- und Dimensionsstabilität aus, was einer wohlausgewogenen Kombination der wesentlichen Werkstoffparameter zu verdanken ist. Beispielsweise kann es von Bedeutung sein, dass die Werkstoffe keinen erkennbaren Erweichungs- bzw. Schmelzpunkt aufweisen. Darüber hinaus tragen niedrige Wärmeausdehnungskoeffizienten sowie ausgezeichnete Kriech- und Versprödungswiderstände zur Dimensionsstabilität bei. Aufgrund dieser Stabilität lässt sich der Isolierdichtkörper mit so geringen Toleranzabweichungen herstellen, wie sie beim Einsatz von üblichen Kunststoffen zuvor ausgeschlossen waren. Diese Dimensionsstabilität hat zur Folge, dass ein beispielsweise aus VESPEL^{®} oder Polyimid gefertigtes Dichtstück auch unter extremen Prozessbedingungen seine Form und Funktionalität nicht verliert. Die Werkstoffe, die sich als besonders geeignet erweisen, wie beispielsweise VESPEL^{®} oder Polyimid kombinieren diese vorteilhafte Dimensionsstabilität mit einer Zähigkeit, die herkömmliche Kunststoffe in aller Regel nicht aufweisen. Darüber hinaus erweisen sich diese Materialien als geeignet, da sie auch unter dauernder Temperatureinwirkung von bis zu etwa 290 °C und kurzfristig auch bis etwa 500 °C nicht schmelzen und somit auch unter hoher Temperatureinwirkung über längere Zeiträume gleichbleibend dimensionsstabil und leistungsstark bleiben.

Wie aus den bisherigen Ausführungen hervorgeht, ist der Innenleiter von dem Isolierdichtkörper umfangsseitig umgeben, der seinerseits wiederum in dem Prozessanschluss eingepasst ist. Um im Folgenden die Terminologie zu vereinheitlichen, wird die außenumfangsseitige Mantelfläche des Innenleiters, an der der Isolierdichtkörper formschlüssig und dadurch dichtend umfangsseitig anliegt, als äußere Mantelfläche des Innenleiters bezeichnet. In entsprechender Weise weist der Isolierdichtkörper eine innere Mantelfläche auf, die an der äußeren Mantelfläche des Innenleiters formschlüssig und dadurch dichtend anliegt und mit dieser exakt zusammenpasst. In entsprechender Weise weist auch der Isolierdichtkörper eine äußere Mantelfläche auf, ebenso wie auch der Prozessanschluss eine innere Mantelfläche aufweist, die im eingebauten Zustand des Isolierdichtkörpers in dem Prozessanschluss formschlüssig und dadurch dichtend zusammenpassen.

Gemäß einer Alternative der vorliegenden Erfindung weist sowohl die innere Mantelfläche des Isolierdichtkörpers als auch die äußere Mantelfläche des Innenleiters einen konischen oder kegelstumpfförmigen Abschnitt auf, wobei sich die Konturen dieser beiden Abschnitte gegenseitig ergänzen und formschlüssig und somit dicht zusammenpassen, so dass der Innenleiter mit seinem konischen oder kegelstumpfförmigen Abschnitt satt in den dazu korrespondierenden Abschnitt des Isolierdichtkörpers dichtend eingepasst werden kann. In entsprechender Weise weist sowohl die innere Mantelfläche des Prozessanschlusses als auch die äußere Mantelfläche des Isolierdichtkörpers einen konischen oder kegelstumpfförmigen Abschnitt auf, wobei sich die Konturen dieser beiden Abschnitte gegenseitig ergänzen und formschlüssig und somit dicht zusammenpassen, so dass der Isolierdichtkörper mit seinem konischen oder kegelstumpfförmigen Abschnitt satt in den dazu korrespondierenden Abschnitt des Prozessanschlusses dichtend eingepasst werden kann.

Wie den vorausgehenden Ausführungen entnommen werden kann, weist also sowohl die innere Mantelfläche des Prozessanschlusses, die äußere Mantelfläche des Isolierdichtkörpers, die innere Mantelfläche des Isolierdichtkörpers als auch die äußere Mantelfläche des Innenleiters einen konischen oder kegelstumpfförmigen Abschnitt auf, wobei sämtliche dieser konischen oder kegelstumpfförmigen Abschnitte so aufeinander abgestimmt sind und zusammenpassen, dass die jeweils aneinanderliegenden Mantelflächen satt dichtend aneinander anliegen.

Ein durch diese konische oder kegelstumpfförmige Formgebung erreichbarer Vorteil besteht darin, dass beispielsweise ein im Behälter herrschender Prozessdruck derart auf den Innenleiter einwirkt, dass der Innenleiter mit seinem konischen oder kegelstumpfförmigen Abschnitt um so mehr in den Isolierdichtkörper hineingepresst wird und sich infolge dessen umso mehr mit diesem verkeilt. Hierdurch wächst die zwischen der innenliegenden Mantelfläche des Isolierdichtkörpers und der außenliegenden Mantelfläche des Innenleiters herrschende Druckspannung an, was den Isolierdichtkörper umso mehr veranlasst, mit seiner innenliegenden Mantelfläche an dem konischen Abschnitt des Innenleiters dicht anzuliegen. Um diesen Vorteil auskosten zu können, muss jedoch der konische oder kegelstumpfförmige Abschnitt des Isolierdichtkörpers auf der dem Behälterinnenraum zugewandten Seite liegen, so dass durch einen im Behälter herrschenden Prozessdruck die beschriebene Keilwirkung hervorgerufen werden kann. Selbstverständlich ist es jedoch auch möglich, den konischen oder kegelstumpfförmigen Abschnitt der inneren Mantelfläche des Isolierdichtkörpers so auszurichten, dass sich die Durchgangsöffnung durch den Isolierdichtkörper in Richtung des Behälterinnenraums verjüngt. In diesem Falle müssten jedoch Zusatzeinrichtungen vorgesehen werden, um den formschlüssigen und dichten Sitz des Innenleiters in dem Isolierdichtkörper zu gewährleisten.

Um diese Keilwirkung infolge eines im Behälterinnenraum herrschenden Prozessdrucks auch für eine Verkeilung des Isolierdichtkörpers in dem Prozessanschluss auskosten zu können, muss der konische oder kegelstumpfförmige Abschnitt der inneren Mantelfläche des Prozessanschlusses so ausgerichtet sein, dass dessen größerer Durchmesser in Richtung des Behälterinnenraums zeigt.

Zwar ist dies eine durchaus praktikable Ausgestaltungsmöglichkeit, jedoch ist gemäß eines weiteren Aspektes der Erfindung der konische oder kegelstumpfförmige Abschnitt der inneren Mantelfläche des Prozessanschlusses vorzugsweise so angeordnet, dass dieser sich in Richtung des Behälterinnenraums verjüngt. Zwar kann in diesem Falle die Keilwirkung infolge eines im Behälterinnenraum herrschenden Prozessdrucks für die Verkeilung des Isolierdichtkörpers im Prozessanschluss nicht ausgenutzt werden, jedoch gestaltet sich diese Ausführungsform in anderer Hinsicht als vorteilhaft, worauf im Folgenden weiter eingegangen werden soll.

Um einen möglichst einfachen und schnellen Zusammenbau der erfindungsgemäßen Durchführungsbaugruppe zu ermöglichen, wird zuerst der Innenleiter mit dem Isolierdichtkörper vormontiert. Hierzu wird der Isolierdichtkörper auf den Innenleiter aufgeschoben und der konus- oder kegelstumpfförmige Abschnitt des Innenleiters in den dazu korrespondierenden konus- oder kegelstumpfförmigen Abschnitt des Isolierdichtkörpers eingetrieben. Anschließend wird über den Innenleiter eine Stützscheibe aus einem harten dielektrischen Kunststoffmaterial, wie beispielsweise PPS GF40 geschoben, die an derjenigen Seite des Isolierdichtkörpers, die dem kleineren Konusdurchmesser der inneren Mantelfläche des Isolierdichtkörpers zugewandt ist, plan anliegt. Anschließend wird auf den Innenleiter eine Mutter aufgeschraubt, die den Isolierdichtkörper fest mit der Stützscheibe verspannt, wodurch der konische Abschnitt der äußeren Mantelfläche des Innenleiters in den konischen Abschnitt der inneren Mantelfläche des Isolierdichtkörpers eingetrieben und gegen diesen fest verspannt wird. Diese Vormontage aus Innenleiter und Isolierdichtkörper bringt einen weiteren durch die vorliegende Erfindung erreichbaren Vorteil mit sich, der darin bestehen kann, dass die einzelnen Bauteile der Durchführungsbaugruppe nicht einzeln in den Prozessanschluss eingebaut werden müssen, sondern dass eine sehr wirtschaftliche Vormontage möglich ist, die bei Bedarf auch an außenstehende Unternehmen vergeben werden kann.

In einem daran anschließenden Fertigungsschritt kann diese aus Innenleiter, Isolierdichtkörper, Stützscheibe und Mutter bestehende Baugruppe von oben in einen Prozessanschluss eingeführt werden. Hierfür erweist es sich, wie bereits zuvor angedeutet, als vorteilhaft, den Abschnitt der innenliegenden Mantelfläche des Prozessanschlusses so auszurichten, dass dieser sich in Richtung des Behälterinnenraums verjüngt. Hierdurch kann erreicht werden, dass durch bloßes Einsetzen des mit dem Isolierdichtkörper vormontierten Innenleiters in den Prozessanschluss sich die außenseitige Mantelfläche des Isolierdichtkörpers mit der innenliegenden Mantelfläche des Prozessanschlusses infolge der Gewichtskraft der vormontierten Baugruppe fest miteinander verkeilen, und somit eine gasdichte Trennung zwischen Behälterinnenraum und Sensorinnenraum gewährleisten. Um jedoch die so in den Prozessanschluss eingesetzte, aus Innenleiter und Isolierdichtkörper vormontierte Baugruppe sicher gegen in dem Behälterinnenraum herrschende Prozessdrücke zu sichern, wird diese mit geeigneten Befestigungsmitteln in dem Prozessanschluss befestigt. Beispielsweise kann die aus Innenleiter, Isolierdichtkörper und Stützscheibe bestehende Baugruppe in die konische Aussparung des Prozessanschlusses unter Verwendung eines ein Außengewinde aufweisenden Ringes eingepresst und dort festgehalten werden, der geeignet ist, in ein entsprechendes, in der Wandung des Prozessanschlusses befindliches Innengewinde eingeschraubt zu werden, um so über die Stützscheibe die vormontierte Baugruppe in den Prozessanschluss fest einzudrücken.

Gemäß einem weiteren Aspekt der vorliegenden Erfindung wird die Druckkraft, die erforderlich ist, um den vormontierten Innenleiter einschließlich der Stützscheibe und der Mutter in den Prozessanschluss hineinzupressen, über einen Verbindungsadapter erzeugt, der den Übergang zwischen dem Prozessanschluss und dem eigentlichen Sensorgehäuse, in dem sich auch die Sensorelektronik befindet, sicherstellt. Die erforderliche Druckkraft, um den vormontierten Innenleiter in den Prozessanschluss zu pressen, kann mittels des Verbindungsadapters sichergestellt werden, indem dieser auf dem Prozessanschluss aufgeschraubt wird, wodurch eine der Stützscheibe zugewandte Anlagefläche des Verbindungsadapters sich auf die Stützscheibe zu bewegt, mit dieser Anlage gelangt, und durch das Aufschrauben des Verbindungsadapters auf dem Prozessanschluss die vormontierte Baugruppe aus Innenleiter und Stützscheibe fest in den Prozessanschluss einpresst.

Gemäß einer Weiterbildung der vorliegenden Erfindung kann es sich als vorteilhaft erweisen, zunächst die aus Innenleiter, Isolierdichtkörper, Stützscheibe und Mutter bestehend Baugruppe in den Prozessanschluss einzusetzen, und anschließend von oben in den Prozessanschluss ein Druckstück, das ebenfalls beispielsweise aus einem harten Kunststoff, wie beispielsweise PPS GF40 herstellt ist, einzusetzen, so dass die Anlagefläche des Verbindungsadapters nicht direkt auf die Stützscheibe drückt, sondern die Druckkraft auf die vormontierte Baugruppe über das Druckstück ausgeübt wird.

### KURZE BESCHREIBUNG DER ZEICHNUNGEN

Im Folgenden werden zum besseren Verständnis und zur weiteren Erläuterung mehrere Ausführungsbeispiele der vorliegenden Erfindung unter Bezugnahme auf die beigefügten Zeichnungen näher beschrieben.
- Fig. 1: ist eine Ansicht eines in einen Behälter eingeschraubten Füllstandsensors;
- Fig. 2: zeigt einen Längsschnitt durch den Füllstandsensor der Fig. 1, wobei jedoch das eigentliche Sensorgehäuse weggelassen wurde; und
- Fig. 3: zeigt eine weitere Ausführungsform einer Durchführungsbaugruppe für einen Füllstandsensor im Längsschnitt.

In allen Figuren hinweg sind gleiche Teile mit übereinstimmenden Bezugszeichen gekennzeichnet.

### BESCHREIBUNG DER BEISPIELHAFTEN AUSFÜHRUNGSFORMEN DER ERFINDUNG

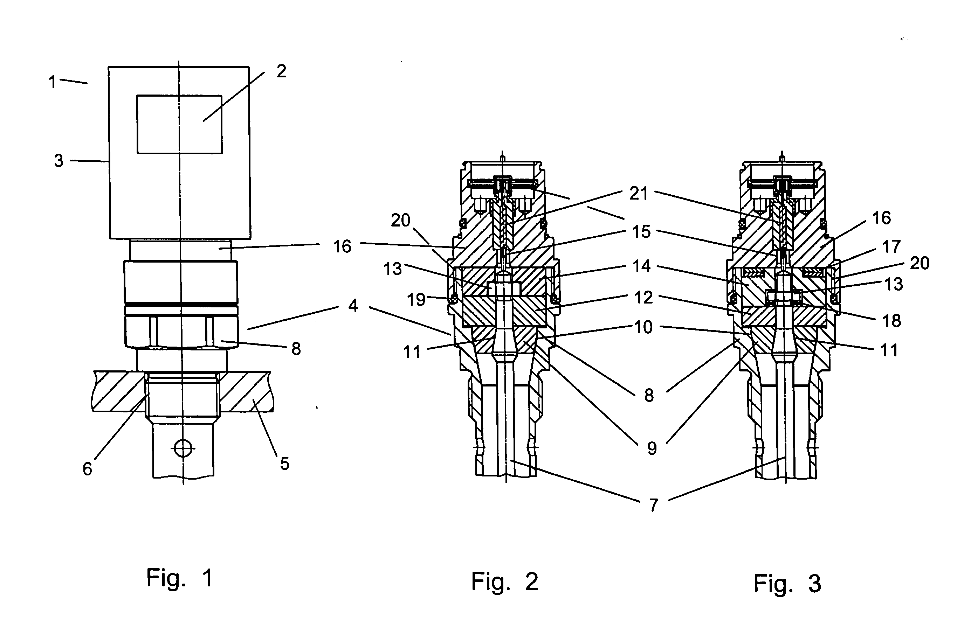

Die Fig. 1 zeigt einen Füllstandsensor 1, wie beispielsweise einen TDR-Füllstandsensor oder einen kapazitiven Füllstandsensor, der in einer Behälterwandung 5 befestigt ist. Der Füllstandsensor 1 besteht im Wesentlichen aus drei miteinander verbundenen Gehäuseteilen 3, 16, 8. Dies ist zum einen das eigentliche Sensorgehäuse 3, in dem die Sensorelektronik 2, die hier lediglich schematisch dargestellt ist, angeordnet ist. Dieses eigentliche Sensorgehäuse 3 ist mit dem Verbindungsadapter 16 beispielsweise über eine Schraubverbindung verbunden. Der Verbindungsadapter 16 besteht, wie der Fig. 2 entnommen werden kann, aus einem massiven Gehäuseteil, in dem mittig ein von einem Dielektrikum umgebener Innenleiter 21 durchgeführt ist. Der Innenleiter 21 des Verbindungsadapters 16 dient dazu, um den elektrischen Kontakt zwischen der Sensorelektronik 2 und dem Innenleiter 7 zu gewährleisten. Hierzu weist der Innenleiter 21 des Verbindungsadapters 16 an seinen beiden Enden entsprechende Kontaktierungsmittel 15, wie beispielsweise Buchsen oder Stecker auf, in oder auf die die entsprechenden Gegenstücke der Sensorelektronik bzw. des Innenleiters 7 ein- bzw. aufgesteckt werden können.

Der Verbindungsadapter 16 ist seinerseits wiederum mit dem Prozessanschluss 8 über eine Schraubverbindung 20 verbunden, in die, wie der Fig. 2 entnommen werden kann, zur Abdichtung des Sensorinnenraums gegenüber der Außenatmosphäre eine O-Ringdichtung 19 eingefügt ist. Der Prozessanschluss 8 ist umfangsseitig mit einem Schraubgewinde 6 versehen, um in den Behälterdeckel 5 eines hier nur ausschnittsweise dargestellten Behälters eingeschraubt zu werden. Anstelle des Schraubgewindes 6 könnte der Prozessanschluss 8 selbstverständlich auch über eine Flanschverbindung mit dem Behälter 5 verbunden werden. Der in der Fig. 1 mit der Bezugsziffer 8 gekennzeichnete Prozessanschluss 8 umfasst die erfindungsgemäße Durchführungsbaugruppe 4, auf die im Folgenden unter Bezugnahme auf die Fig. 2 näher eingegangen wird.

Wie der Fig. 2 entnommen werden kann, die den Füllstandsensor der Fig. 1 im Längsschnitt, jedoch ohne das Sensorgehäuse 3 zeigt, ist der Verbindungsadapter 16 über das Gewinde 20 mit dem Prozessanschluss 8 verschraubt, wobei zur Abdichtung des Sensorinnenraums gegenüber der Außenatmosphäre in diese Verschraubung eine O-Ringdichtung 19 eingefügt ist. In den von dem Prozessanschluss 8 gebildeten becherartigen Innenraum ist, wie hier dargestellt, die aus Innenleiter 7, Isolierdichtkörper 9, Stützscheibe 12 und Mutter 13 bestehende vormontierte Baugruppe passgenau eingesetzt.

Diese vormontierte Baugruppe wird hergestellt, indem zunächst auf den Innenleiter 7 der Isolierdichtkörper 9 von oben aufgeschoben wird, bis die innenliegende konische Mantelfläche des Isolierdichtkörpers 9 vollflächig und satt an dem Abschnitt des Innenleiters 7 mit der außenliegenden konischen Mantelfläche anliegt. Anschließend wird von oben über den Innenleiter 7 die hohlzylinderförmige Stützscheibe 12 aufgeschoben, bis diese plan an dem Isolierdichtkörper 9 anliegt. Anschließend wird auf den Innenleiter 7 von oben die Mutter 13 aufgeschraubt, wodurch die Stützscheibe 12 mit dem Isolierdichtkörper 9 fest verspannt wird. Indem die Mutter 13 weiter angezogen wird, wird der konische Abschnitt des Innenleiters 7 in die konische Ausnehmung des Isolierdichtkörpers 9 eingetrieben, bzw. hineingezogen, wodurch in der inneren Dichtfläche 11 zwischen der außenliegenden Mantelfläche des Innenleiters 7 und der innenliegenden Mantelfläche des Außenleiters eine Flächenspannung entsteht. Da der Isolierdichtkörper 9 aus einem temperaturunempfindlichen, druckfesten, kriech- und/oder fließarmen Kunststoffmaterial, wie beispielsweise Polyimid, gefertigt ist, kann sich der Isolierdichtkörper infolge der erzeugten Flächenspannung in der Dichtfläche 11 möglicherweise vorhandenen Oberflächenunebenheiten der außenliegenden Mantelfläche des konischen Abschnitts des Innenleiters 7 anpassen, wodurch die Druck- und Gasdichtheit der inneren Dichtfläche 11 trotz möglicher Oberflächenunebenheiten sichergestellt wird.

Die so vorgefertigte Baugruppe wird dann in den becherförmigen Hohlraum des Prozessanschlusses 8 eingeführt, wodurch die außenliegende konische Mantelfläche des Isolierdichtkörpers 9 mit der innenliegenden konischen Mantelfläche des Prozessanschlusses 8 in Anlage gebracht wird. Da die Außenkontur der außenliegenden konischen Mantelfläche des Isolierdichtkörpers 9 mit der innenliegenden konischen Mantelfläche des Prozessanschlusses 8 exakt übereinstimmt, bilden diese beiden Flächen zusammen eine absolut dichte Abdichtung des Behälterinnenraums gegenüber dem Sensorinnenraum. Um möglicherweise in dem Behälterinnenraum herrschenden Prozessdrücken widerstehen zu können und nicht aus dieser dichtenden Einbaulage herausgedrückt zu werden, wird der Verbindungsadapter 15 auf den Prozessanschluss 8 in bereits zuvor beschriebener Weise aufgeschraubt, wodurch das zuvor zwischen die Stützscheibe 12 und Verbindungsadapter 15 eingefügte Druckstück 14 mit einer Druckkraft beaufschlagt wird, wodurch die gesamte vormontierte Baugruppe aus Innenleiter 7, Isolierdichtkörper 9, Stützscheibe 12 und Mutter 13 fest in den konischen Sitz des Prozessanschlusses 8 gepresst wird. Für den Fall, dass die innenliegende konische Mantelfläche des Prozessanschlusses 8 leicht von ihrer Sollgeometrie, die im Optimalfall mit der äußeren konischen Mantelfläche des Isolierdichtkörpers 9 übereinstimmen sollte, abweicht, passt sich der Isolierdichtkörper 9 infolge seiner bereits zuvor beschriebenen Materialeigenschaften der innenliegenden konischen Mantelfläche des Prozessanschlusses 8 an, wodurch die Dichtheit der Dichtfläche 10 gewährleistet werden kann.

Die Fig. 3 zeigt eine Weiterbildung der in der Fig. 2 gezeigten Durchführungsbaugruppe für einen Füllstandsensor, bei der der Innenleiter 7 unter Verwendung eines Federelements 18, wie beispielsweise einer Tellerfeder 18 vorgespannt wird. Hierzu ist die Feder 18 zwischen die Mutter 13 und die Stützscheibe 12 eingebaut, um diese beiden Teile auseinander zu pressen. Ein durch die Bereitstellung der Feder 18 erreichbarer Vorteil der vorliegenden Erfindung besteht darin, dass eventuell auftretende Fließ- oder Kriechverformungen des Materials des Isolierdichtkörpers 9 ausgeglichen werden können. In entsprechender Weise wird, wie in der Fig. 3 gezeigt, auch die Vorspannung der äußeren Dichtfläche 10 unter Verwendung mehrerer Federelemente 17, wie beispielsweise mehrerer Tellerfedern 17 aufrechterhalten. Hierzu sind die Federn 17 zwischen das Druckstück 14 und die innere Anlagefläche des Verbindungsadapters 16 eingepasst, wodurch über das Druckstück 14 die von den Federn 17 ausgeübten Kräfte Kriech- oder Fließverformungen des Isolierdichtkörpers 9 die äußere Dichtfläche 10 auf Dauer dicht gehalten werden kann. Hierbei gewährleistet die Stützscheibe 12 eine sichere Verpressung des Isolierdichtkörpers 9 und stützt Druckkräfte ab, welche die Federkräfte, z.B. infolge des Prozessdrucks überschreiten können.

## Patentansprüche

1. Durchführungsbaugruppe für einen in oder an einem Behälter (5) anbringbaren Füllstandsensor (1) mit
einem Prozessanschluss (8),
einem in dem Prozessanschluss (8) angeordneten Innenleiter (7), und -
einem eine feste Form aufweisenden Isolierdichtkörper (9), durch den sich der Innenleiter (7) hindurch erstreckt, der sowohl den Innenleiter (7) formschlüssig und dichtend umfangsseitig umgibt als auch formschlüssig und dichtend in den Prozessanschluss (8) eingepasst ist,
wobei der Isolierdichtkörper (9) eine passgenau vorgefertigte innere Mantelfläche (11) und der Innenleiter (7) eine äußere Mantelfläche (11) aufweist, wobei die innere Mantelfläche (11) des Isolierdichtkörpers (9) und die äußere Mantelfläche (11) des Innenleiters (7) formschlüssig und dicht zusammenpassen, **dadurch gekennzeichnet, dass**
sowohl die innere Mantelfläche (11) des Isolierdichtkörpers (9) als auch die äußere Mantelfläche (11) des Innenleiters (7) einen konischen oder kegelstumpfförmigen Abschnitt aufweist und dass sich der Innenleiter (7) ferner durch eine Stützscheibe (12) hindurch erstreckt, die an derjenigen Seite des Isolierdichtkörpers (9), die dem kleineren Konusdurchmesser der inneren Mantelfläche (11) des Isolierdichtkörpers (9) zugewandt ist, plan anliegt und gegen den Isolierdichtkörper (9) gespannt ist, wodurch der konische Abschnitt der äußeren Mantelfläche (11) des Innenleiters (7) in den konischen Abschnitt der inneren Mantelfläche (11) des Isolierdichtkörpers (9) eingetrieben und gegen diesen verspannt wird.

2. Durchführungsbaugruppe für einen in oder an einem Behälter (5) anbringbaren Füllstandsensor (1) mit
einem Prozessanschluss (8),
einem in dem Prozessanschluss (8) angeordneten Innenleiter (7), und
einem eine feste Form aufweisenden Isolierdichtkörper (9), durch den sich der Innenleiter (7) hindurch erstreckt, der sowohl den Innenleiter (7) formschlüssig und dichtend umfangsseitig umgibt als auch formschlüssig und dichtend in den Prozessanschluss (8) eingepasst ist,
wobei der Prozessanschluss (8) eine innere Mantelfläche (10) und der Isolierdichtkörper (9) eine passgenau vorgefertigte äußere Mantelfläche (10) aufweist, wobei die innere Mantelfläche (10) des Prozessanschlusses (8) und die äußere Mantelfläche (10) des Isolierdichtkörpers (9) formschlüssig und dicht zusammenpassen, **dadurch gekennzeichnet, dass**
sowohl die innere Mantelfläche (10) des Prozessanschlusses (8) als auch die äußere Mantelfläche (10) des Isolierdichtkörpers (9) einen konischen oder kegelstumpfförmigen Abschnitt aufweist und dass sich der Innenleiter (7) ferner durch eine Stützscheibe (12) hindurch erstreckt, die an der Seite des Isolierdichtkörpers (9), die dem größeren Konusdurchmesser der äußeren Mantelfläche (10) des Isolierdichtkörpers (9) zugewandt ist, plan anliegt und mit einer äußeren Druckkraft beaufschlagt wird, wodurch der konische Abschnitt der äußeren Mantelfläche (10) des Isolierdichtkörpers (9) in den konischen Abschnitt der inneren Mantelfläche (10) des Prozessanschlusses (8) eingetrieben und gegen diesen verspannt wird.

3. Durchführungsbaugruppe gemäß Anspruch 1, **dadurch gekennzeichnet, dass**
sich die konischen oder kegelstumpfförmigen Abschnitte sowohl der inneren Mantelfläche (11) des Isolierdichtkörpers (9) als auch der äußere Mantelfläche (11) des Innenleiters (7) in Richtung des Behälterinnenraums aufweiten.

4. Durchführungsbaugruppe gemäß einem der Ansprüche 1 oder 3, **dadurch gekennzeichnet, dass**
die innere Mantelfläche (11) des Isolierdichtkörpers (9) und die äußere Mantelfläche (11) des Innenleiters (7) gasdicht gegeneinander verspannt sind.

5. Durchführungsbaugruppe gemäß einem der Ansprüche 1, 3 oder 4, **dadurch gekennzeichnet, dass**
der konische oder kegelstumpfförmige Abschnitt des Innenleiters (7) in den konischen oder kegelstumpfförmigen Abschnitt des Isolierdichtkörpers (9) eingetrieben ist.

6. Durchführungsbaugruppe gemäß einem der Ansprüche 1 oder 3 bis 5, **dadurch gekennzeichnet, dass**
die Stützscheibe (12) mit einer auf den Innenleiter (7) aufschraubbaren Mutter (13) gegen den Isolierdichtkörper (9) gespannt wird.

7. Durchführungsbaugruppe gemäß Anspruch 6, **dadurch gekennzeichnet, dass**
zwischen der Mutter (13) und dem Isolierdichtkörper (9) ein Federelement (18) angeordnet ist, um mögliche Kriechverformungen auszugleichen.

8. Durchführungsbaugruppe gemäß Anspruch 2, **dadurch gekennzeichnet, dass**
sich die konischen oder kegelstumpfförmigen Abschnitte sowohl der inneren Mantelfläche (10) des Prozessanschlusses (8) als auch der äußeren Mantelfläche (10) des Isolierdichtkörpers (9) in Richtung des Behälterinnenraums verjüngen.

9. Durchführungsbaugruppe gemäß einem der Ansprüche 2 oder 8, **dadurch gekennzeichnet, dass**
die innere Mantelfläche (10) des Prozessanschlusses (8) und die äußere Mantelfläche (10) des Isolierdichtkörpers (9) gasdicht gegeneinander verspannt sind.

10. Durchführungsbaugruppe gemäß einem der Ansprüche 2, 8 oder 9, **dadurch gekennzeichnet, dass**
der konische oder kegelstumpfförmige Abschnitt des Isolierdichtkörper (9) in den konischen oder kegelstumpfförmigen Abschnitt des Prozessanschlusses (8) eingetrieben ist.

11. Durchführungsbaugruppe gemäß einem der Ansprüche 2 oder 8-10, **dadurch gekennzeichnet, dass**
die äußere Druckkraft über einen Verbindungsadapter (16) erzeugt wird, der außerhalb des Behälters (5) auf den Prozessanschluss (8) geschraubt wird, wodurch ein zwischen dem Verbindungsadapter (16) und der Stützscheibe (12) angeordnetes Druckstück (14) gegen die Stützscheibe (12) gespannt wird.

12. Durchführungsbaugruppe gemäß Anspruch 11, **dadurch gekennzeichnet, dass**
zwischen dem Verbindungsadapter (16) und der Stützscheibe (12) ein Federelement (17) angeordnet ist, um mögliche Kriechverformungen auszugleichen.

13. Durchführungsbaugruppe gemäß einem der Ansprüche 1 bis 12, **dadurch gekennzeichnet, dass**
der Isolierdichtkörper (9) aus einem temperaturunempfindlichen, druckfesten, kriech- und fließarmen Kunststoffmaterial gefertigt ist

14. Durchführungsbaugruppe gemäß einem der Ansprüche 1 bis 13, **dadurch gekennzeichnet, dass**
der Isolierdichtkörper (9) aus Polyimid gefertigt ist.

15. Durchführungsbaugruppe gemäß einem der Ansprüche 11 oder 12, **dadurch gekennzeichnet, dass**
der Verbindungsadapter (16) eine Steckbuchse (15) aufweist, um durch das Aufschrauben des Verbindungsadapters (16) auf den Prozessanschluss (8) elektrischen Kontakt mit dem Innenleiter (17) sicherzustellen.

16. Füllstandsensor mit
einer Durchführungsbaugruppe (4) gemäß einem der vorhergehenden Ansprüche, und
einem Verbindungsadapter (16), der auf den Prozessanschluss (8) geschraubt wird, wodurch der Isolierdichtkörper (9) fest in den Prozessanschluss (8) eingetrieben und mit diesem verspannt wird.

## Claims

1. A guide-through assembly for a filling level sensor (1) attachable in or on a vessel (5), with
a process connection (8),
an interior conductor (7) arranged within the process connection (8), and
a solid-state insulating sealing body (9) through which the interior conductor (7) extends and which circumferentially surrounds the interior conductor (7) in a positive and sealing engagement and is fitted into the process connection (8) in a positive and sealing engagement,
wherein the insulating sealing body (9) has a precisely preformed interior circumferential surface (11) and the interior conductor (7) has an outer circumferential surface (11), wherein the interior circumferential surface (11) of the insulating sealing body (9) and the outer circumferential surface (11) of the interior conductor (7) fit together in a positive and sealing engagement,
**characterized in that**
both the interior circumferential surface (11) of said insulating sealing body (9) and the exterior circumferential surface (11) of said interior conductor (7) have a conical or tapering section, and **in that**
said interior conductor (7) extends through a support washer (12) which lies flat against the side of said insulting sealing body (9) facing towards the smaller diameter of the conical section of the interior circumferential surface (11) of said insulating sealing body (9) and is clamped against said insulating sealing body (9), causing the conical section of the exterior circumferential surface (11) of said interior conductor (7) to be driven into the conical section of the interior circumferential surface (11) of said insulating sealing body (9) and to be wedged against the latter.

2. A guide-through assembly for a filling level sensor (1) attachable in or on a vessel (5), with
a process connection (8),
an interior conductor (7) arranged within the process connection (8), and
a solid-state insulating sealing body (9) through which the interior conductor (7) extends and which circumferentially surrounds the interior conductor (7) in a positive and sealing engagement and is fitted into the process connection (8) in a positive and sealing engagement,
wherein the process connection (8) has an interior circumferential surface (10) and the insulating sealing body (9) has a precisely preformed outer circumferential surface (10), wherein the interior circumferential surface (10) of the process connection (8) and the outer circumferential surface (10) of the insulating sealing body (9) fit together in a positive and sealing engagement,
**characterized in that**
both the interior circumferential surface (10) of said process connection (8) and the exterior circumferential surface (10) of said insulating sealing body (9) have a conical or tapering section, and **in that**
said interior conductor (7) extends through a support washer (12) which lies flat against the side of said insulting sealing body (9) facing towards the larger diameter of the conical section of the exterior circumferential surface (10) of said insulating sealing body (9) and to which an exterior pressure force is applied, causing the conical section of the exterior circumferential surface (10) of said insulating sealing body (9) to be driven into the conical section of the interior circumferential surface (10) of said process connection (8) and to be wedged against the latter.

3. The guide-through assembly according to claim 1,
**characterized in that**
the conical or tapering sections of both the interior circumferential surface (11) of said insulating sealing body (9) and the exterior circumferential surface (11) of said interior conductor (7) expand towards the interior of the vessel.

4. The guide-through assembly according to claim 1 or 3,
**characterized in that**
the interior circumferential surface (11) of said insulating sealing body (9) and the exterior circumferential surface (11) of said interior conductor (7) are wedged against each other in a gas-tight manner.

5. The guide-through assembly according to one of the claims 1, 3 or 4,
**characterized in that**
the conical or tapering section of said interior conductor (7) is driven into the conical or tapering section of said insulating sealing body (9).

6. The guide-through assembly according to one of the claims 1, or 3 to 5,
**characterized in that**
the support washer (12) is clamped against said insulating sealing body (9) by means of a nut (13) which can be screwed onto said interior conductor (7).

7. The guide-through assembly according to claim 6,
characterized in thatbetween said nut (13) and said insulating sealing body (9), a spring element (18) is positioned in order to compensate for any deformations due to creep.

8. The guide-through assembly according to claim 2,
**characterized in that**
the conical or tapering sections of both the interior circumferential surface (10) of said process connection (8) and the exterior circumferential surface (10) of said insulating sealing body (9) taper towards the interior of the vessel.

9. The guide-through assembly according to one of the claims 2 or 8,
**characterized in that**
the interior circumferential surface (10) of said process connection (8) and the exterior circumferential surface (10) of said insulating sealing body (9) are wedged against each other in a gas-tight manner.

10. The guide-through assembly according to one of the claims 2, 8 or 9,
**characterized in that**
the conical or tapering section of said insulating sealing body (9) is driven into the conical or tapering section of said process connection (8).

11. The guide-through assembly according to one of the claims 2 or 8 - 10,
**characterized in that**
the exterior pressure force is applied by a connection adapter (16) screwed onto the process connection (8) from the outside of the vessel (5) and causing a pressure member (14) positioned between the connection adapter (16) and the support washer (12) to be clamped against the support washer (12).

12. The guide-through assembly according to claim 11,
**characterized in that**
between said connection adapter (16) and said support washer (12), a spring element (17) is arranged to compensate for any deformations due to creep.

13. The guide-through assembly according to one of the claims 1 to 12,
**characterized in that**
said insulating sealing body (9) is made of a temperature-resistant, pressure-resistant, creep and flow-resistant plastic material.

14. The guide-through assembly according to one of the claims 1 to 13,
characterized in thatsaid insulating sealing body (9) is made of polyimide.

15. The guide-through assembly according to one of the claims 11 or 12,
**characterized in that**
said connection adapter (16) has a socket (15) for ensuring an electrical contact with the interior conductor (7) when said connection adapter (16) is screwed onto the process connection (8).

16. A filling level sensor, comprising a guide-through assembly (4) according to one of the above claims, and a connection adapter (16) which is screwed onto the process connection (8) causing said insulating sealing body (9) to be firmly driven into said process connection (8) and to be wedged against the latter.

## Revendications

1. Ensemble de traversée pour un capteur de niveau (1) qui peut être monté dans ou sur un réservoir (5), comprenant
un raccord de processus (8),
un conducteur intérieur (7) disposé dans le raccord de processus (8), et
un corps d'étanchéité isolant (9) présentant une forme rigide, au travers duquel s'étend le conducteur intérieur (7), lequel corps, entoure aussi bien du côté périphérique le conducteur intérieur (7), hermétiquement et par coopération de forme, qu'il est encastré hermétiquement et par coopération de forme dans le raccord de processus (8),
le corps d'étanchéité isolant (9) présentant une surface latérale intérieure (11) préfabriquée précisément ajustée et le conducteur intérieur (7) présentant une surface latérale extérieure (11), la surface latérale intérieure (11) du corps d'étanchéité isolant (9) et la surface latérale extérieure (11) du conducteur intérieur (7) étant adaptées par coopération de forme et hermétiquement, **caractérisé en ce que** aussi bien la surface latérale intérieure (11) du corps d'étanchéité isolant (9) que la surface latérale extérieure (11) du conducteur intérieur (7) présentent une section conique ou tronconique, et que le conducteur intérieur (7) s'étend en outre au travers d'un disque d'appui (12), qui s'applique en plan sur le côté du corps d'étanchéité isolant (9), tourné vers le diamètre de cône le plus petit de la surface latérale intérieure (11) du corps d'étanchéité isolant (9), et est tendu contre le corps d'étanchéité isolant (9), la section conique de la surface latérale extérieure (11) du conducteur intérieur (7) étant de ce fait enfoncée dans la section conique de la surface latérale intérieure (11) du corps d'étanchéité isolant (9) et tendue contre ce dernier.

2. Ensemble de traversée pour un capteur de niveau (1) qui peut être monté dans ou sur un réservoir (5), comprenant
un raccord de processus (8),
un conducteur intérieur (7) disposé dans le raccord de processus (8), et
un corps d'étanchéité isolant (9) présentant une forme rigide, au travers duquel s'étend le conducteur intérieur (7), lequel corps, entoure aussi bien du côté périphérique le conducteur intérieur (7), hermétiquement et par coopération de forme, qu'il est encastré hermétiquement et par coopération de forme dans le raccord de processus (8),
le raccord de processus (8) présentant une surface latérale intérieure (10) et le corps d'étanchéité isolant (9) présentant une surface latérale extérieure (10) préfabriquée précisément ajustée, la surface latérale intérieure (10) du raccord de processus (8) et la surface latérale extérieure (10) du corps d'étanchéité isolant (9) étant adaptées par coopération de forme et hermétiquement,
**caractérisé en ce que**
aussi bien la surface latérale intérieure (10) du raccord de processus (8) que la surface latérale extérieure (10) du corps d'étanchéité isolant (9) présentent une section conique ou tronconique, et que le conducteur intérieur (7) s'étend en outre au travers d'un disque d'appui (12), qui s'applique en plan sur le côté du corps d'étanchéité isolant (9), tourné vers le diamètre de cône le plus grand de la surface latérale extérieure (10) du corps d'étanchéité isolant (9), et est sollicité par une force de pression extérieure, la section conique de la surface latérale extérieure (10) du corps d'étanchéité isolant (9) étant de ce fait enfoncée dans la section conique de la surface latérale intérieure (10) du raccord de processus (8) et serrée contre ce dernier.

3. Ensemble de traversée selon la revendication 1, **caractérisé en ce que**
les sections coniques ou tronconiques, aussi bien de la surface latérale intérieure (11) du corps d'étanchéité isolant (9) que de la surface latérale extérieure (11) du conducteur intérieur (7), s'élargissent en direction de l'espace intérieur du réservoir.

4. Ensemble de traversée selon l'une des revendications 1 ou 3, **caractérisé en ce que**
la surface latérale intérieure (11) du corps d'étanchéité isolant (9) et la surface latérale extérieure (11) du conducteur intérieur (7) sont tendues l'une contre l'autre de façon étanche aux gaz.

5. Ensemble de traversée selon l'une des revendications 1, 3 ou 4, **caractérisé en ce que**
la section conique ou tronconique du conducteur intérieur (7) est enfoncée dans la section conique ou tronconique du corps d'étanchéité isolant (9).

6. Ensemble de traversée selon l'une des revendications 1 ou 3 à 5, **caractérisé en ce que**
le disque d'appui (12) est serré par un écrou (13), qui peut être vissé sur le conducteur intérieur (7), contre le corps d'étanchéité isolant (9).

7. Ensemble de traversée selon la revendication 6, **caractérisé en ce que**
un élément à ressort (18) est disposé entre l'écrou (13) et le corps d'étanchéité isolant (9), en vue de compenser des déformations de fluage possibles.

8. Ensemble de traversée selon la revendication 2, **caractérisé en ce que**
les sections coniques ou tronconiques, aussi bien de la surface latérale intérieure (10) du raccord de processus (8) que de la surface latérale extérieure (10) du corps d'étanchéité isolant (9), se rétrécissent en direction de l'espace intérieur du réservoir.

9. Ensemble de traversée selon l'une des revendications 2 et 8, **caractérisé en ce que**
la surface latérale intérieure (10) du raccord de processus (8) et la surface latérale extérieure (10) du corps d'étanchéité isolant (9) sont tendues l'une contre l'autre de façon étanche aux gaz.

10. Ensemble de traversée selon l'une des revendications 2, 8 ou 9, **caractérisé en ce que**
la section conique ou tronconique du corps d'étanchéité isolant (9) est enfoncée dans la section conique ou tronconique du raccord de processus (8).

11. Ensemble de traversée selon l'une des revendications 2 ou 8 - 10, **caractérisé en ce que**
la force de pression extérieure est produite par l'intermédiaire d'un adaptateur d'assemblage (16), vissé à l'extérieur du réservoir (5) sur le raccord de processus (8), une pièce de pression (14), disposée entre l'adaptateur d'assemblage (16) et le disque d'appui (12), étant serrée de ce fait contre le disque d'appui (12).

12. Ensemble de traversée selon la revendication 11, **caractérisé en ce que**
un élément à ressort (17) est disposé entre l'adaptateur d'assemblage (16) et le disque d'appui (12), afin de compenser des déformations de fluage possibles.

13. Ensemble de traversée selon l'une des revendications 1 à 12, **caractérisé en ce que**
le corps d'étanchéité isolant (9) est fabriqué en une matière plastique insensible à la température, résistante à la pression, à faible indice de fluage et de fluidité.

14. Ensemble de traversée selon l'une des revendications 1 à 13, **caractérisé en ce que**
le corps d'étanchéité isolant (9) est fabriqué en polyimide.

15. Ensemble de traversée selon l'une des revendications 11 ou 12, **caractérisé en ce que**
l'adaptateur d'assemblage (16) présente une douille (15), afin de garantir un contact électrique avec le conducteur intérieur (17) par le vissage de l'adaptateur d'assemblage (16) sur le raccord de processus (8).

16. Capteur de niveau comprenant
un ensemble de traversée (4) selon l'une des revendications précédentes, et un adaptateur d'assemblage (16), vissé sur le raccord de processus (8), le corps d'étanchéité isolant (9) étant de ce fait enfoncé fixement dans le raccord de processus (8) et serré avec ce dernier.
